# EUROPÄISCHE PATENTSCHRIFT

(11) **EP 0 754 245 B1**
(45) Veröffentlichungstag und Bekanntmachung des Hinweises auf die Patenterteilung: **09.05.2001**
(21) Anmeldenummer: 96901631.0
(22) Anmeldetag: 07.02.1996
(51) Int. Cl.: C21B 3/04, C21B 11/00, C22B 7/04

(54) **VERFAHREN ZUR HERSTELLUNG VON ROHEISEN ODER STAHL UND ZEMENTKLINKER AUS SCHLACKEN**
METHOD OF MANUFACTURING PIG IRON OR STEEL AND CEMENT CLINKER FROM SLAGS
PROCEDE DE FABRICATION DE FONTE OU D'ACIER ET DE CLINKER DE CIMENT A PARTIR DE LAITIER

(30) Priorität: 07.02.1995 AT 21895
(43) Veröffentlichungstag der Anmeldung: 22.01.1997
(73) Patentinhaber: "HOLDERBANK" Financière Glarus AG, 8750 Glarus (CH)
(72) Erfinder: EDLINGER, Alfred, CH-5400 Baden (CH)
(74) Vertreter: Haffner, Thomas M., Dr.
(86) Internationale Anmeldenummer: AT9600019
(87) Internationale Veröffentlichungsnummer: WO9624696

(56) Entgegenhaltungen:
- EP-A- 0 605 378
- WO-A-94/17214
- BE-A- 769 260
- DE-A- 2 611 889
- FR-A- 2 172 206
- GB-A- 922 586
- US-A- 4 396 422
- STAHL UND EISEN, Bd. 104, Nr. 16, 13.August 1984, DUSSELDORF,DE, Seiten 774-778, XP002004305 JACQUES PIRET: "verwertung von ld-schlacke zur erzeugung von portlandzementklinker und roheisen"
- PATENT ABSTRACTS OF JAPAN vol. 10, no. 287 (C-375), 30.September 1986 & JP,A,61 104013 (IWATE SEITETSU), 22.Mai 1986,

## Beschreibung

Die Erfindung bezieht sich auf ein Verfahren zur Herstellung von Roheisen oder Stahl und Zementklinker aus Schlacken.

Es ist bereits bekannt, vorreduzierte und zumindest teilweise vorgewärmte Chargen gemeinsam mit Kohle in einer Wirbelschicht einzublasen, wobei unter Reduktion der Charge Kohle in einer Wirbelschicht vergast wird und Roheisen sowie Schlacke flüssig abgezogen werden. Diese bekannten Einschmelzvergasungsreaktionen sind in der Regel auf das gewünschte Roheisenausbringen hinoptimiert. Um gleichzeitig neben Roheisen auch Zementklinker herstellen zu können, wurde dem Einschmelzvergaser bei einem älteren Vorschlag bereits Erz und ein Kalksatz gemeinsam aufgegeben, wobei durch den Kalksatz die gewünschte Zementklinkerzusammensetzung eingestellt werden konnte. Durch entsprechende Einstellung der Schlackenbasizität kann aus einer Reihe von Schlacken ein geeignetes Ausgangsmaterial mit hydraulischen Eigenschaften synthetisiert werden, welches entweder unmittelbar als sogenannter Hüttenzement oder aber als Zuschlagsstoff bei der Zementabstimmung bzw. Herstellung zum Einsatz gelangen kann. Stark basische Schlacken, wie beispielsweise LD-Schlacken, sind aber aufgrund ihres hohen Eisenoxidgehaltes in der Regel nicht unmittelbar für eine Weiterverwendung bei der Zementherstellung geeignet. Mit Rücksicht auf zunehmende Belastung derartiger Stahlschlacken und insbesondere LD-Schlacken mit Schwermetallen wird auch die Entsorgung derartiger Schlacken immer problematischer. Vor allen Dingen die relativ hohen Mengen an Stahlwerksschlacken können gegenwärtig nicht mehr wirtschaftlich genutzt werden, und mit Rücksicht auf den steigenden Schwermetallgehalt ist zu befürchten, daß auch die Verhaldung mit immer größeren Problemen behaftet sein wird.

GB-A-922586 ; Stahl und Eisen, Bd. 104, Nr. 16, 13.08.84, Seiten 774-778 und WO-A-94/17214 beschreiben ein Verfahren zur Herstellung von Roheisen und Zementklinker aus Schlacken, wobei eisenoxidhaltige flüssige Schlacken mit Eisenoxidträgern und Kalk vermischt und die gebildete Ferritschlacke in einem Reduktionsreaktor unter Ausbildung eines Eisenbades und einer Sinterphase unter Verbrennung von Kohlenstoff reduziert wird, worauf die Sinterphase als Klinker ausgebracht wird.

Bei der Herstellung von hydraulischen Bindemitteln erfahren Bindemittelzusatzstoffe, welche Abbindezeit, Zeitfestigkeit und andere für Bindemittel wesentliche Parameter beeinflussen, eine immer größere Bedeutung. Derartige Zusatzstoffe können im Zusammenhang mit konventionellen hydraulischen Bindemitteln, wie beispielsweise Hüttenzementen oder Portlandzementen, zur Einstellung der gewünschten Eigenschaften verwendet werden.

Die Erfindung zielt nun darauf ab, ein Verfahren der eingangs genannten Art zu schaffen, bei welchem eine Reihe von Schlacken und insbesondere von problematischen Schlacken in besonders einfacher Weise in wertvolle hydraulische Bindemittel und Bindemittelzusatzstoffe bei gleichzeitiger Herstellung von Roheisen oder Stahl umgewandelt werden können. Zur Lösung dieser Aufgabe besteht das erfindungsgemäße Verfahren im wesentlichen darin, daß eisenoxidhältige flüssige Schlacken, wie z.B. Stahlwerksschlacke mit Eisenoxidträgern, wie z.B. Eisenerzen, basischen Schwacherzen, Walzwerkszunder oder Hüttenstäuben und Kalk vermischt wird, daß die Mischung aus flüssiger Einsatzschlacke, Eisenoxidträgern und Kalk über einen Zeitraum von wenigstens 10 Minuten bei einer Temperatur von über 1450°C, vorzugsweise 1500°C zur Homogenisierung gehalten wird und die gebildete Ferritschlacke in einem Eisenbadreaktor unter Ausbildung eines Eisenbades und einer Sinterphase unter Verbrennung von Kohlenstoff reduziert wird und die Reduktion bis zu einem Fe₂O₃-Gehalt zwischen 3 und 12 Gew.% geführt wird, worauf die Sinterphase als Klinker ausgebracht wird. Vor allen Dingen bei flüssiger Stahlschlacke, wie sie beim LD-Prozeß anfällt, sind neben zu hohen Eisenoxidwerten relativ niedrige CaO-Werte dafür verantwortlich, daß homogene Klinkerstrukturen mit den geforderten kristallographischen Eigenschaften, wie insbesondere hohen Alit/C₃S-Werten nicht ohne weiteres erzielt werden können. Dadurch, daß nun derartige eisenoxidhältige flüssige Schlacken, wie z.B. Stahlwerksschlacke mit Eisenoxidträgern, wie. z.B. Eisenerzen und Kalk vermischt werden, werden die entsprechenden kristallographischen Randbedingungen für die Ausbildung von synthetischen Bindemittelzusätzen oder synthetischen hydraulischen Bindemitteln wesentlich verbessert. Die Frühfestigkeit von Zementen hängt im hohen Maße vom Alitgehalt entsprechender Zementklinker ab. Durch die erfindungsgemäße Verfahrensführung durch Zusatz von Eisenerzen, basischen Schwacherzen od.dgl. und Kalk zu eisenoxidhältigen flüssigen Schlacken wird es möglich Zementklinker mit hohen Frühfestigkeitswerten herzustellen. Die Vermischung der flüssigen eisenoxidhältigen Schlacken mit den genannten Eisenoxidträgern erlaubt es eine Ferritphase auszubilden, und die Mischschlacke aus eisenoxidhältigen flüssigen Schlacken und Eisenoxidträgern der eingangs genannten Art wird daher im folgenden in einfacher Weise als Ferritschlacke bezeichnet. Diese Zugabe von Eisenoxid bzw. Eisenoxidträgern führt bei im wesentlichen gleichbleibender Temperatur zu einer starken Verflüssigung bzw. Absenkung der Viskosität, wodurch sich ein in eisenoxidhältiger flüssiger Schlacke, wie z.B. LD-Schlacke, enthaltener Stahl, welcher in dispergierter Form vorliegt, leicht absetzen läßt und getrennt abziehen läßt. Insgesamt kann auf diese Weise eine flüssige, im wesentlichen stahlfreie Ferritschlacke gebildet werden, welche lediglich in bezug auf CaO untersättigt ist. Eben diese Untersättigung wird durch den Kalkzusatz ausgeglichen, wobei aufgrund der erniedrigten Viskosität das zugegebene CaO homogen in der Schlacke in Form von Calciumferriten und Calciumsilikaten aufgelöst werden kann. Soweit dies erforderlich ist, kann zur Anpassung an die gewünschte Klinkerkomposition an dieser Stelle auch eine Reihe von üblichen Korrekturstoffen, wie z.B. Bauxit, zugegeben werden, wodurch die Schmelzviskosität auch weiter herabgesetzt werden kann.

Dadurch, daß nun in der Folge die Schlacke unter Ausbildung eines Eisenbades und einer Sinterphase unter Verbrennung von Kohlenstoff reduziert wird, gelingt es Ferrit zu Roheisen zu reduzieren und einen Zementklinkersinter zu erhalten, welcher sich durch besonders vorteilhaftes Phasengefüge auszeichnet.

Da so vorgegangen wird, daß die Reduktion bis zu einem Fe₂O₃-Gehalt zwischen 3 und 12 Gew.% geführt wird, wird sichergestellt, daß das Fe₂O₃ dünnflüssige Schmelzphasen bzw. Kanäle zwischen den festen Klinkermineralien Alit und Belit im Sinter ausbildet, wodurch die reduzierten Eisentröpfchen in das Eisenbad sedimentieren können. Der Mindestanteil von Fe₂O₃ im Klinker ist hierbei vor allen Dingen deshalb notwendig, um die Klinkerphasen im anschließenden Kühlvorgang zu stabilisieren. Das Eisenbad dient hierbei zusätzlich zu den im Eisenbad stattfindenden Vergasungsreaktionen auch als Träger- und Transportmedium für die entstehenden festen Klinkerstrukturen. Eine direkt mit festem Kohlenstoff ohne Eisenbad durchgeführte Ferritreduktion führt üblicherweise zu praktisch nicht zu beherrschenden Anpackungs- und Austragungsproblemen im Klinkerreaktor. Klinkerphasen selbst haben Schmelzpunkte über 2000°C, die technisch bzw. ökonomisch nicht beherrschbar sind.

Mit Vorteil wird das erfindungsgemäße Verfahren so weitergeführt, daß die Klinker in oxidierender Atmosphäre nachgesintert werden. Eine derartige Nachbearbeitung dient der Entfernung der Eisentröpfchen, wobei dispergiertes Eisen oxidiert wird und vorteilhafter Weise in Fe³⁺-Form in die Klinkerphasen oxidisch eingebunden wird.

Die homogene und dünnflüssige Ferritschlacke, wie sie über dem Eisenbad ausgebildet wird, hat dabei den Vorteil, daß das in dem Eisenbad gebildete Kohlenmonoxid in einfacher Weise durchtreten und abgezogen werden kann. In besonders vorteilhafter Weise wird erfindungsgemäß so vorgegangen, daß einer Konverterschlacke bzw. LD-Schlacke Eisenerz, insbesondere Hämatit in einer Menge von 15 bis 30 Gew.% zugesetzt wird. Eine derartige Hämatitzugabe erlaubt unmittelbar die Ansteuerung der Reduktion auf die geforderten Fe₂O₃-Gehalte und stellt gleichzeitig Sauerstoff für eine direkte Reduktion des im Eisenbad gelösten Kohlenstoffs zur Verfügung. Weiters wird mit einer derartigen Hämatitzugabe das entsprechende Eisenbad im Reduktionsreaktor gewährleistet.

Mit Vorteil wird Kalk in einer Menge von 7 bis 15 Gew.% bezogen auf die Ausgangsschlackenmenge eingesetzt. Kalk in der Form von kalziniertem CaCO₃, d.h. CaO gleicht die Untersättigung der stahlfreien Ferritschlacke aus, und es werden Calciumferrite und Calciumsilikate ausgebildet. Mit Vorteil kann die Mischung aus flüssiger Einsatzschlacke und Erzen bevor der Kalksatz zugesetzt wird einer Sedimentation unterworfen werden, um auf diese Weise tatsächlich eine weitestgehend stahlfreie Ferritschlacke zu erhalten.

Um eine weitestgehende Homogenisierung nach dem Kalkzusatz zu gewährleisten, wird so vorgegangen, daß die Mischung aus Einsatzschlacke, Eisenoxidträgern und Kalk über einen Zeitraum von wenigstens 10 Minuten bei einer Temperatur von über 1450°C, vorzugsweise 1500°C zur Homogenisierung gehalten wird, bevor die Ferritschlacke in den Eisenbadreaktor eingebracht wird.

Die erforderliche thermische Energie kann prinzipiell durch direkte oder indirekte Reduktion zur Verfügung gestellt werden. Mit Vorteil wird aber ein kombiniertes Verfahren angewandt, wobei eine besonders günstige Energiebilanz bzw. eine autotherme Verfahrensweise bei gleichzeitig optimalen Bedingungen für die Metall- und die Klinkerherstellung dadurch gewährleistet werden kann, daß die Verbrennung von Kohlenstoff im Reduktionsreaktor sowohl in direkter Reduktion durch Umsetzung mit dem Fe₂O₃ der Ferritschlacke als auch in indirekter Reduktion durch Einblasen von Sauerstoff oder Luft in das Eisenbad unter Ausbildung von CO vorgenommen wird, wobei in vorteilhafter Weise die eingeblasene Luft bzw. Sauerstoffmenge so bemessen wird, daß der Anteil der indirekten Reduktion zwischen 10 und 20 %, insbesondere etwa 15 % und der Anteil an direkter Reduktion 80 bis 90 %, insbesondere etwa 85 % beträgt.

Eine weitere Nutzung der entstandenen Energie kann dadurch erfolgen, daß das im Reduktionsreaktor gebildete Heizgas mit der heißen Klinkerkühler-Abluft nachverbrannt wird, wobei eine derartige Nachverbrennung beispielsweise zum Kalzinieren von CaCO₃ und zum Vorwärmen von Zusatzstoffen verwendet werden kann.

Die Erfindung wird nachfolgend anhand eines Ausführungsbeispieles sowie eines Flußdiagrammes näher erläutert.
Ausführungsbeispiel:
Ausgegangen wurde von flüssiger LD-Schlacke mit folgender Zusammensetzung:

| Komponente | Anteil % |
|---|---|
| SiO₂ | 17 |
| Al₂O₃ | 1,5 |
| CaO | 42 |
| MgO | 4 |
| MnO | 8 |
| Fe₂O₃ | 11 |
| (Fe)met | 8 |

Dieser Schlacke wurde 22 % Hämatit (Fe₂O₃) zugesetzt, die Badtemperatur lag bei 1600°C. Nach 10-minütigem Verweilen setzten sich 8 % Stahl flüssig ab.

Der dünnflüssigen Schlacke wurde nun 10 % Branntkalk (CaO), bezogen auf die Ausgangsschlackenmenge, zugesetzt, und es wurde 20 Minuten bei 1500°C zur Homogenisierung verweilt. Diese Ferritschlackenschmelze wurde nun über dem Eisenbad-Einschmelzvergaser 15 Minuten bei 1500°C reduziert und daraus resultierte ein Sinter mit folgender Zusammensetzung:

| Komponente | Anteil % |
|---|---|
| SiO₂ | 18 |
| Al₂O₃ | 2 |
| CaO | 58 |
| MgO | 4 |
| MnO | 6 |
| Fe₂O₃ | 8 |

Dieser Klinker wurde konventionell mit Luft gekühlt.

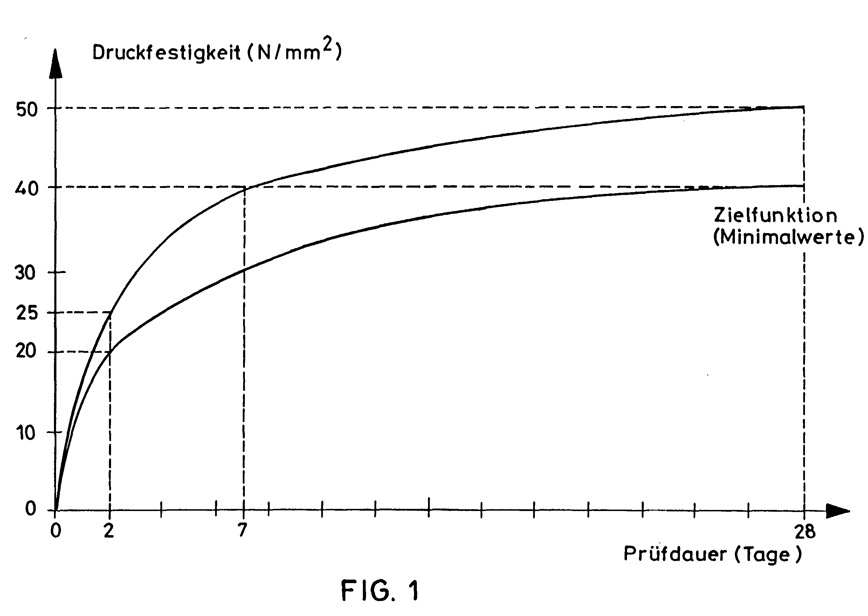

Der erhaltene Klinker wurde auf die Festigkeitsentwicklung mit dem in Fig. 1 dargestellten Resultat geprüft.

Daneben zeigt der erhaltene Klinker auch eine ausgesprochen gute Sulfatbeständigkeit.

Ausgehend aus dem oben angeführten Ausführungsbeispiel ergeben sich folgende Stoff- und Energieflußbetrachtungen.

Wie bereits erwähnt, werden 68 % flüssige LD-Schlacke, 10 % CaO und 22 % Fe₂O₃ miteinander verschmolzen. Nach dem Stahlabstich ergibt sich ein flüssiges Zwischenprodukt mit 33 % Fe₂O₃. Da der entstehende Klinker noch 8 % Fe₂O₃-Gehalt aufweisen soll, müssen pro Tonne Ferritschlacke ("Zwischenprodukt") 250 kg Fe₂O₃ reduziert werden.

Im gesamten System wird mit einem Wärmeverlust durch Abstrahlung, Gasverluste etc. von 50 % gerechnet. Dies entspricht einem Wärmedefizit von 0,9 GJ/t Ferritschlacke (F.S.). Dazu kommt noch der Wärmebedarf von Rohmaterialvorwärmung (CaCO₃, Fe₂O₃) sowie der Kalzination (CaCO₃ ⇒ CaO + CO₂). Dies bedeutet einen weiteren Wärmebedarf von 0,7 GJ/t Ferritschlacke. Um 250 kg Fe₂O₃/t Ferritschlacke zu 175 kg Fe zu reduzieren, müssen bei der direkten Reduktion (Fe₂O₃ + 3C ⇒ 3CO) 0,225 GJ/t Ferritschlacke aufgebracht werden. Der gesamte Wärmebedarf setzt sich also zusammen aus:

| Wärmebedarf | GJ/t Ferritschlacke |
|---|---|
| HSR 5.3-Systemverlust | 0,9 |
| Vorwärmung + Kalzination | 0,7 |
| Direktreduktion | 0,225 |
| Summe Wärmebedarf | 1,825 (~435 Kcal/kg) |

Es stehen drei grundsätzliche Reduktionsalternativen zur Auswahl, nämlich
1. die vollständige indirekte Reduktion
2. die vollständige direkte Reduktion
3. die direkte und indirekte Reduktion mit Nachverbrennung ("autothermes Verfahren")

### 1. Vollständige, indirekte Reduktion (Vergasung)

Falls das (Fe₂O₃) der Ferritschlacke über die Gas-Flüssigphasen-Reduktion 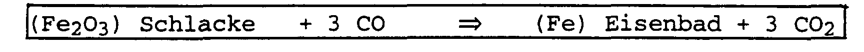 zu Metalleisen reduziert werden soll, müssen in das Eisenbad (= Vergasermedium) 130 kg C sowie 173 kg O₂ (bzw. 825 kg Luft), bezogen auf 1 Tonne Ferritschlacke, zugeführt werden. Dies führt im Eisenbad zu einer Wärme-Entwicklung von 1,44 GJ/t Ferritschlacke. Dabei entsteht 304 kg Abgas mit 15 % CO₂ und 85 % CO (nach der Reduktion!)

Die Wärmebilanz bei dieser Variante stellt sich daher wie folgt dar:

| Wärmebedarf | GJ/t Ferritschlacke |
|---|---|
| Systemverlust | 0,9 |
| Vorwärmung | 0,7 |
| Vergasung | -1,44 |
| Wärmedefizit | 0,16 |

### 2. Vollständige, direkte Reduktion

Falls das (Fe₂O₃) der Ferritschlacke mit Hilfe von im Eisenbad gelöstem Kohlenstoff direkt reduziert werden soll, werden nur 20 kg C benötigt. Dabei entstehen 47 kg CO (37,6 Nm³CO) und es werden 0,225 GJ/t Ferritschlacke "Reduktionswärme" benötigt.

Die Wärmebilanz bei dieser Variante stellt sich daher wie folgt dar:

| Wärmebedarf | GJ/t Ferritschlacke |
|---|---|
| Systemverlust | 0,9 |
| Vorwärmung | 0,7 |
| Reduktion | -0,225 |
| Wärmedefizit | -1,825 |

### 3. Autothermisches Verfahren (Nachverbrennung)

### Indirekte Reduktion

Wie oben ersichtlich, entsteht ein sehr heizwertreiches Abgas (85 % CO, 304 kg (=Nm³)/t Ferritschlacke)!!

Falls dieses verbrannt wird, entstehen 2,6 GJ/t und damit weit mehr als im Prozess verbraucht wird.

Tatsächlich müßten nur 16 Nm³ Abgas verbrannt werden, damit diese Prozess-Variante "autotherm" zu betreiben ist.

### Direkte Reduktion

Wie oben ersichtlich, entsteht ein sehr heizwertreiches Abgas (100 % CO, 37,6 Nm³). Falls dieses verbrannt wird, entstehen 0,376 GJ/t Ferritschlacke, was noch immer ein Wärmedefizit von 1,825 - 0,376 = 1,5 GJ/Ferritschlacke bedeutet.

Durch Wärmerückgewinnungsmaßnahmen (Klinkerkühler) können 1 GJ/t Ferritschlacke rückgewonnen werden, so daß sich das Wärmedefizit auf ca. 0,5 GJ/t Ferritschlacke ermäßigt. Dieses Wärmedefizit könnte z.B. durch Verfeuerung von z.B. Abfallbrennstoffen ausgeglichen werden.

### Kombiniertes Verfahren

Durch eine Kombination von direkter mit indirekter Reduktion und Nachverbrennung gelingt es, eine echt autotherme Verfahrensweise zu fahren.

Bei vollständiger, indirekter Reduktion mit Nachverbrennung entstehen:

| | | |
|---|---|---|
| 1,44 | GJ/t | Vergasungswärme |
| 2,6 | GJ/t | Abgas-Verbrennungswärme |
| 1 | GJ/t | Kühler-Abwärme |
| 5 | GJ/t | Gesamtwärmeangebot |

Bei vollständiger, direkter Reduktion mit Nachverbrennung entstehen:

| | | |
|---|---|---|
| -0,225 | GJ/t | Reduktionswärme |
| +0,376 | GJ/t | Abgas-Verbrennungswärme |
| +1 | GJ/t | Kühler-Abwärme |
| 1 | GJ/t | Gesamtwärmeangebot |

Diese Gesamtwärme-Angebote müssen mit dem Wärmebedarf verglichen werden:

| | |
|---|---|
| Systemverlust | 0,9 GJ/t |
| Vorwärmung/Kalzination | 0,9 GJ/t |
| Wärmebedarf | 1,6 GJ/t |

Das vollständig autotherm betriebene Verfahren wird daher mit Vorteil zu 15 % als indirekte Reduktion und zu 85 % als direkte Reduktion mit vollständiger Nachverbrennung betrieben. Die entsprechenden Verbräuche betragen:

| | |
|---|---|
| 36,5 kg | Kohlenstoff |
| 26 kg | Sauerstoff |

Die "Nachverbrennung" kann z.B. mit heißer Klinkerkühler-Abluft betrieben werden, siehe auch Verfahrensfließbild.

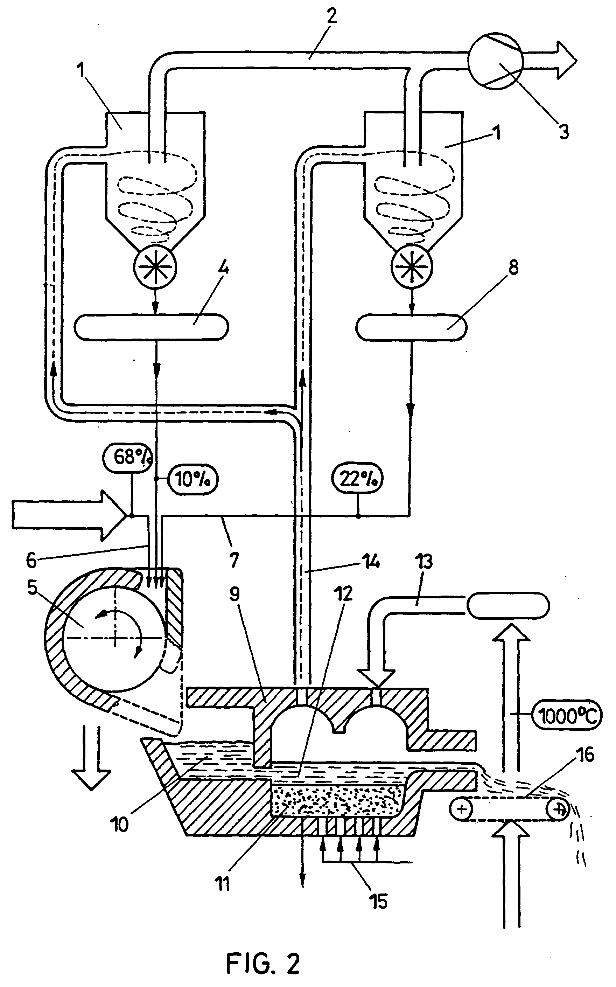

In Fig. 2 ist das Verfahrenskonzept anhand einer schematischen Darstellung einer für die Durchführung des Verfahrens geeigneten Einrichtung näher erläutert. In Fig. 2 ist mit 1 ein Zyklon-Vorwärmeaggregat bezeichnet, über welches ausgetragener Kalkstein von heißem Abgas abgetrennt wird. Das heiße Abgas wird über die Abgasleitung 2 und ein Sauggebläse 3 abgesaugt.

Heißmehl bzw. Branntkalk wird nach entsprechender Vorwärmung aus einem Behälter 4 in einen Ferritreaktor 5 eingebracht. In den Ferritreaktor 5 werden weiters über Zuführungsleitungen 6 flüssige LD-Schlacken und über eine Zuführungsleitung 7 heiße Eisenoxide eingetragen. Die heißen Eisenoxide werden hier einem vorgewärmten Speicher 8 entnommen, wobei auch hier wiederum ein Zyklon-Vorwärmer 1 vorgesehen ist, über welchen Feinstpartikel, wie beispielsweise Walzwerkszunder, aus dem Gasstrom des heißen Abgases abgetrennt werden.

Nach entsprechender Verweilzeit im Ferritreaktor 5 gelangt das flüssige Ferritschlacken-Gemisch in einen Eisenbadreaktor 9. Nach Abgießen der Schlacke kann der im Ferritreaktor sedimentierte Rohstahl gesondert durch Verschwenken des Ferritreaktors ausgetragen werden. Die Ferritschlacke 10 im Inneren des Eisenbadreaktors gelangt in einen Einschmelzvergasungsraum, wo über einem Eisenbad 11 eine Sinterphase 12 ausgebildet wird. In den Raum oberhalb der Sinterphase kann über eine Leitung 13 Heißluft zugeführt werden, um eine Nachverbrennung von gebildetem Kohlenmonoxid zu erzielen. Das heiße Abgas gelangt mit feinen Feststoffen über die Abgasleitung 14 zu dem bereits eingangs erwähnten Zyklon-Vorwärmeaggregat, um in der Folge über die Abgasleitung 2 nach erfolgter Reinigung ausgetragen zu werden.

In das Eisenbad münden schematisch mit 15 angedeutete Lanzen, über welche Kohlenstoff und Sauerstoff eingeblasen werden können, um die entsprechende Reduktion sicherzustellen. Nach Ausbildung der gewünschten Sinterphase kann diese auf einen Kühler 16 ausgetragen werden, wobei die Kühlluft nach erfolgter Kühlung als Heißluft über die Leitung 13 dem Nachverbrennungsraum des Eisenbadreaktors bzw. Einschmelzvergasers zugeführt werden kann. Es wird ein alithaltiger Klinker erzielt, welcher sich durch besonders gute Frühfestigkeitswerte auszeichnet.

## Patentansprüche

1. Verfahren zur Herstellung von Roheisen oder Stahl und Zementklinker aus Schlacken, dadurch gekennzeichnet, daß eisenoxidhältige flüssige Schlacken, wie z.B. Stahlwerksschlacke, mit Eisenoxidträgern, wie z.B. Eisenerzen, basischen Schwacherzen, Walzwerkszunder oder Hüttenstäuben, und Kalk vermischt wird, daß die Mischung aus flüssiger Einsatzschlacke, Eisenoxidträgern und Kalk über einen Zeitraum von wenigstens 10 Minuten bei einer Temperatur von über 1450°C, vorzugsweise 1500°C zur Homogenisierung gehalten wird und die gebildete Ferritschlacke (10) in einem Eisenbadreaktor (9) unter Ausbildung eines Eisenbades (11) und einer Sinterphase (12) unter Verbrennung von Kohlenstoff reduziert wird und daß die Reduktion bis zu einem Fe₂O₃-Gehalt zwischen 3 und 12 Gew.% geführt wird, worauf die Sinterphase (12) als Klinker ausgebracht wird.

2. Verfahren nach Anspruch 1, daß die Klinker in oxidierender Atmosphäre nachgesintert werden.

3. Verfahren nach Anspruch 1 oder 2, dadurch gekennzeichnet, daß einer Konverterschlacke bzw. LD-Schlacke Eisenerz, insbesondere Hämatit in einer Menge von 15 bis 30 Gew.% zugesetzt wird.

4. Verfahren nach Anspruch 1, 2 oder 3, dadurch gekennzeichnet, daß Kalk in einer Menge von 7 bis 15 Gew.% bezogen auf die Ausgangsschlackenmenge eingesetzt wird.

5. Verfahren nach einem der Ansprüche 1 bis 4, dadurch gekennzeichnet, daß die Mischung aus flüssiger Einsatzschlacke und Erzen einer Sedimentation unterworfen wird, bevor der Kalksatz zugesetzt wird.

6. Verfahren nach einem der Ansprüche 1 bis 5, dadurch gekennzeichnet, daß die Verbrennung von Kohlenstoff im Reduktionsreaktor (9) sowohl in direkter Reduktion durch Umsetzung mit dem Fe₂O₃ der Ferritschlacke (10) als auch in indirekter Reduktion durch Einblasen von Sauerstoff oder Luft in das Eisenbad unter Ausbildung von CO vorgenommen wird.

7. Verfahren nach Anspruch 6, dadurch gekennzeichnet, daß die eingeblasene Luft bzw. Sauerstoffmenge so bemessen wird, daß der Anteil der indirekten Reduktion zwischen 10 und 20 %, insbesondere etwa 15 % und der Anteil an direkter Reduktion 80 bis 90 %, insbesondere etwa 85 % beträgt.

8. Verfahren nach einem der Ansprüche 1 bis 7, dadurch gekennzeichnet, daß das im Reduktionsreaktor (9) gebildete Heizgas mit der heißen Klinkerkühler-Abluft nachverbrannt wird.

## Claims

1. A process for producing pig iron or steel and cement clinker from slags, characterized in that iron-oxide-containing liquid slags such as, e.g., steelmaking slag, are mixed with iron oxide carriers such as, e.g., iron ores, basic weak ores, rolling mill scales or metallurgical dusts, and lime, that the mixture of liquid charging slag, iron oxide carriers and lime is maintained at a temperature of above 1450°C, preferably 1500°C, over a period of at least 10 minutes for homogenization and the ferritic slag (10) formed is reduced in an iron bath reactor (9) while forming an iron bath (11) and a sinter phase (12) under the combustion of carbon, and that the reduction is continued to an Fe₂O₃ content ranging between 3 and 12 wt.-%, whereupon the sinter phase (12) is discharged in the form of clinkers.

2. A process according to claim 1, characterized in that the clinkers are resintered in an oxidizing atmosphere.

3. A process according to claim 1 or 2, characterized in that iron ore, in particular hematite, is added to a converter slag or LD slag in an amount of from 15 to 30 wt.-%.

4. A process according to claim 1, 2 or 3, characterized in that lime is charged in an amount of from 7 to 15 wt.-%, based on the starting slag amount.

5. A process according to any one of claims 1 to 4, characterized in that the mixture of liquid charging slag and ores is subjected to sedimentation prior to the addition of the lime batch.

6. A process according to any one of claims 1 to 5, characterized in that the combustion of carbon in the reduction reactor (9) is effected both in a direct reduction by reaction with the Fe₂O₃ of the ferrite slag (10) and in an indirect reduction by blowing oxygen or air into the iron bath while forming CO.

7. A process according to claim 6, characterized in that the amount of air or oxgyen blown in is proportioned such that the portion of indirect reduction amounts to between 10 and 20 %, in particular about 15 %, and the portion of direct reduction amounts to between 80 and 90 %, in particular about 85 %.

8. A process according to any one of claims 1 to 7, characterized in that the heating gas formed in the reduction reactor (9) is afterburned with the hot outgoing air from the clinker cooler.

## Revendications

1. Procédé de production de fonte brute ou d'acier et de clinkers de ciment à partir de laitiers, caractérisé en ce que l'on mélange des laitiers liquides renfermant des oxydes de fer, tels que par exemple du laitier d'aciérie, avec des porteurs d'oxydes de fer, tels que par exemple des minerais de fer, des minerais pauvres basiques, de la calamine de laminoirs ou des poussières de sidérurgie, et de la chaux, en ce que le mélange de la charge liquide de laitier, de porteurs d'oxydes de fer et de chaux est, pour son homogénéisation, maintenu, sur une durée d'au moins 10 minutes, à une température supérieure à 1450°C, de préférence 1500°C, et le laitier de ferrite (10) produit est réduit, par combustion de carbone, dans un réacteur de bain de fer (9) en formant un bain de fer (11) et une phase frittée (12), et en ce que la réduction est conduite jusqu'à une teneur en Fe₂O₃ entre 3 et 12% en poids, la phase frittée (12) étant ensuite extraite en tant que clinkers.

2. Procédé selon la revendication 1, caractérisé en ce que les clinkers sont refrittés dans une atmosphère oxydante.

3. Procédé selon la revendication 1 ou 2, caractérisé en ce que l'on ajoute à un laitier de convertisseur ou un laitier LD, du minerai de fer, notamment de l'hématite, dans une quantité de 15 à 30% en poids.

4. Procédé selon la revendication 1, 2 ou 3, caractérisé en ce que l'on met en oeuvre de la chaux dans une quantité de 7 à 15% en poids, relativement à la quantité initiale de laitier.

5. Procédé selon l'une des revendications 1 à 4, caractérisé en ce que le mélange de la charge liquide de laitier et des minerais est soumis à une sédimentation, avant l'addition de la charge de chaux.

6. Procédé selon l'une des revendications 1 à 5, caractérisé en ce que la combustion de carbone dans le réacteur de réduction (9) est effectuée aussi bien dans une réduction directe par transformation avec le Fe₂O₃ du laitier de ferrite (10), que dans une réduction indirecte par soufflage d'oxygène ou d'air dans le bain de fonte avec formation de CO.

7. Procédé selon la revendication 6, caractérisé en ce que la quantité d'air ou d'oxygène introduite par soufflage est proportionnée de façon à ce que la part de la réduction indirecte se situe entre 10 et 20%, en particulier soit d'environ 15%, et que la part de réduction directe se situe entre 80 et 90%, en particulier soit d'environ 85%.

8. Procédé selon l'une des revendications 1 à 7, caractérisé en ce que lc gaz chaud produit dans le réacteur de réduction (9) subit une postcombustion avec l'air chaud évacué du refroidisseur de clinker.
